(19) Europäisches Patentamt
European Patent Office
Office européen des brevets

(11) Veröffentlichungsnummer: **0 021 332**
**B1**

(12) # EUROPÄISCHE PATENTSCHRIFT

(45) Veröffentlichungstag der Patentschrift: **23.02.83**

(51) Int. Cl.³: **C 09 B 29/20**, C 08 K 5/34, D 06 P 1/18

(21) Anmeldenummer: **80103380.4**

(22) Anmeldetag: **18.06.80**

(54) **Azoverbindungen, Verfahren zu ihrer Herstellung und Verwendung.**

(30) Priorität: **25.06.79 DE 2925542**

(43) Veröffentlichungstag der Anmeldung:
**07.01.81 Patentblatt 81/1**

(45) Bekanntmachung des Hinweises auf die Patenterteilung:
**23.02.83 Patentblatt 83/8**

(84) Benannte Vertragsstaaten:
**BE CH DE FR GB LI**

(56) Entgegenhaltungen:
**DE-A-1 644 226**
**FR-A-1 286 993**
**FR-A-2 393 031**

***Die Akte enthält technische Angaben, die nach dem Eingang der Anmeldung eingereicht wurden und die nicht in dieser Patentschrift enthalten sind.***

(73) Patentinhaber: **HOECHST AKTIENGESELLSCHAFT, Postfach 80 03 20, D-6230 Frankfurt/Main 80 (DE)**

(72) Erfinder: **Hunger, Klaus, Dr., Johann-Strauss-Strasse 35, D-6233 Kelkheim (Taunus) (DE)**

EP 0 021 332 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Azoverbindungen, Verfahren zu ihrer Herstellung und Verwendung

Gegenstand der Erfindung sind Azoverbindungen der Formel I

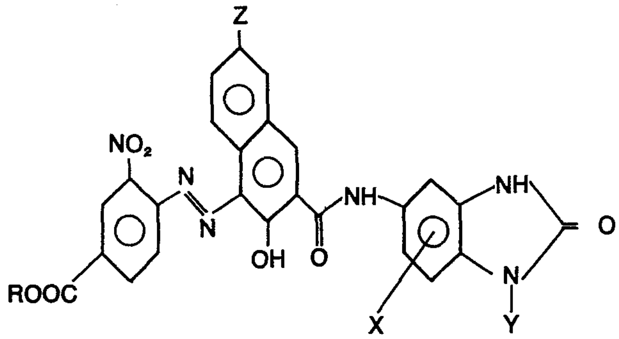

I

in der R einen Alkylrest mit 1 bis 4 C-Atomen, X ein Wasserstoff-, Chlor- oder Bromatom, eine Methyl-, Ethyl-, Methoxy- oder Ethoxygruppe, Y ein Wasserstoffatom, eine Methyl- oder Ethylgruppe und Z ein Wasserstoff-, Brom- oder Chloratom bedeuten.

Die Erfindung betrifft weiterhin ein Verfahren zur Herstellung der genannten Azoverbindungen, das dadurch gekennzeichnet ist, dass man Verbindungen der Formel II

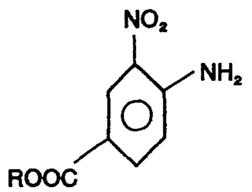

II

in der R die obengenannte Bedeutung aufweist, diazotiert und die erhaltene Diazoniumverbindung mit einer Verbindung der Formel III

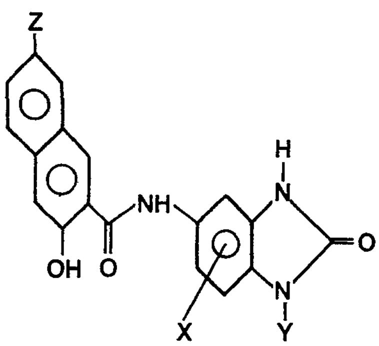

III

in der X, Y und Z die für Formel I genannten Bedeutungen aufweisen, kuppelt.

Die Erfindung betrifft weiterhin die Verwendung der erfindungsgemässen Azoverbindungen als Farbmittel, insbesondere als Pigmente.

Als Amine der Formel II können beispielsweise eingesetzt werden:

3-Nitro-4-aminobenzoesäuremethylester
3-Nitro-4-aminobenzoesäureethylester
3-Nitro-4-aminobenzoesäure-n-propylester
3-Nitro-4-aminobenzoesäure-isopropylester
3-Nitro-4-aminobenzoesäure-n-butylester
3-Nitro-4-aminobenzoesäure-isobutylester
3-Nitro-4-aminobenzoesäure-1′-methyl-propylester.

Die Diazotierung des Amins der Formel II kann beispielsweise mit Alkalinitriten oder niederen Alkylnitriten mit ausreichend starken Säuren, insbesondere einer Mineralsäure, aber auch mit Nitrosylschwefelsäure erfolgen. Es kann hierbei als auch bei der anschliessenden Kupplung von Nutzen sein, einen Zusatz von oberflächenaktiven Mitteln zu verwenden, wie z.B. nichtionogenen, anionaktiven oder kationaktiven Dispergiermitteln. Die Diazotierung erfolgt zweckmässig bei −10 bis +30 °C und die Kupplung bei 0 bis 40 °C.

Als Kupplungskomponenten werden beispielsweise verwendet:

5-(2′-Hydroxy-3′-naphthoylamino)-benzimidazolon-(2)
5-(2′-Hydroxy-3′-naphthoylamino)-6-chlorbenzimidazolon-(2)
5-(2′-Hydroxy-3′-naphthoylamino)-7-chlorbenzimidazolon-(2)
5-(2′-Hydroxy-3′-naphthoylamino)-6-brombenzimidazolon-(2)
5-(2′-Hydroxy-3′-naphthoylamino)-7-brombenzimidazolon-(2)
5-(2′-Hydroxy-3′-naphthoylamino)-6-methylbenzimidazolon-(2)
5-(2′-Hydroxy-3′-naphthoylamino)-7-methylbenzimidazolon-(2)
5-(2′-Hydroxy-3′-naphthoylamino)-4-methylbenzimidazolon-(2)
5-(2′-Hydroxy-3′-naphthoylamino)-6-ethylbenzimidazolon-(2)
5-(2′-Hydroxy-3′-naphthoylamino)-6-methoxybenzimidazolon-(2)
5-(2′-Hydroxy-3′-naphthoylamino)-7-methoxybenzimidazolon-(2)
5-(2′-Hydroxy-3′-naphthoylamino)-6-ethoxybenzimidazolon-(2)
5-(2′-Hydroxy-3′-naphthoylamino)-7-ethoxybenzimidazolon-(2)
5-(2′-Hydroxy-3′-naphthoylamino)-1-methylbenzimidazolon-(2)

5-(2'-Hydroxy-6'-brom-3'-naphthoylamino)-benzimidazolon-(2)

Diazotierung und Kupplung können auch in Gegenwart geeigneter organischer Lösemittel durchgeführt werden, wie z. B. Eisessig, niederen Alkanolen, Dioxan, Formamid, Dimethylformamid, Dimethylsulfoxid, Pyridin oder N-Methylpyrrolidon. Zur Erzielung der vollen Farbstärke ist es oft zweckmässig, das Kupplungsgemisch einige Zeit zu erhitzen, beispielsweise zu kochen oder unter Druck bei Temperaturen über 100 °C zu halten, gegebenenfalls in Gegenwart von organischen Lösemitteln, wie niederen Alkanolen, beispielsweie Äthanol oder Isobutanol, Halogenaromaten wie Chlorbenzol oder Dichlorbenzolen, z. B. o-Dichlorbenzol, Dimethylformamid, N-Methylpyrrolidon oder in Gegenwart von Harzseife. Besonders reine und farbstarke Pigmente erhält man mit den erfindungsgemässen Produkten, wenn man nach der Kupplung die feuchten Presskuchen oder die getrockneten Pulver einer thermischen Nachbehandlung mit organischen Lösemitteln, wie Alkoholen, vor allem niederen Alkanolen, Pyridin, Eisessig, Dimethylformamid, N-Methylpyrrolidon, Dimethylsulfoxid, Halogenaromaten wie Chlorbenzol oder Dichlorbenzolen, z. B. o-Dichlorbenzol, oder Nitrobenzol unterwirft oder eine Mahlung der Pigmente unter Zusatz von Mahlhilfsmitteln anschliesst.

Der Begriff «nieder» im Zusammenhang mit Alkylresten umfasst Gruppen mit 1 bis 6, insbesondere 1 bis 4 C-Atomen.

Die Herstellung der Pigmente kann auch in Gegenwart eines Trägermaterials, beispielsweise von Schwerspat, erfolgen.

Die neuen Verbindungen sind wasserunlöslich und unlöslich in den üblichen organischen Lösemitteln und eignen sich zur Pigmentierung von Druckfarben, Farblacken und Dispersionsanstrichfarben, zum Färben von Kautschuk, Kunststoffen und natürlichen oder synthetischen Harzen. Insbesondere sind sie für Lacke, auch Metalleffektlacke, geeignet, an die besonders hohe Echtheitsanforderungen gestellt werden.

Sie sind ferner geeignet für den Pigmentdruck auf Substraten, insbesondere Textilfasermaterialien oder anderen flächenförmigen Gebilden, wie beispielsweise Papier.

Die Pigmente können auch für andere Anwendungsgebiete, z. B. in fein verteilter Form zum Anfärben von Kunstseide aus Viskose oder Celluloseäthern bzw. -estern, Polyamiden, Polyurethanen, Polyglykolterephthalaten oder Polyacrylnitrilen in der Spinnmasse oder zum Färben von Papier verwendet werden.

Die Pigmente lassen sich in den genannten Medien gut verarbeiten. Die Färbungen weisen sehr gute Licht- und Wetterechtheiten auf und sind gegen den Einfluss von Chemikalien, vor allem Lösemitteln, beständig. Ausserdem zeichnen sich die erfindungsgemässen Pigmente durch einwandfreie Überlackierechtheit in Lacken und Ausblutechtheit in Kunststoffen aus.

Gegenüber der strukturell nächstvergleichbaren Verbindung (Beispiel 51 der DE-AS-1 816 990) weisen die erfindungsgemässen Pigmente wesentlich bessere Licht-, Wetter- und Migrationsechtheiten auf.

In den folgenden Beispielen beziehen sich die Prozentangaben auf das Gewicht.

Beispiel 1

10,5 g 3-Nitro-4-aminobenzoesäureethylester werden in 80 ml Eisessig und 15 ml 31%iger Salzsäure eine Stunde lang bei 10 °C verrührt. Man lässt dann 10 ml einer 5 N-Natriumnitritlösung zutropfen und rührt 30 Minuten nach.

16 g 5-(2'-Hydroxy-3'-naphthoylamino)-benzimidazolon-2-Natriumsalz werden mit 10 ml 33%iger Natronlauge in einer Mischung aus 750 ml Ethanol und 250 ml Wasser gelöst.

Auf eine vorgelegte Lösung von 200 ml Eiswasser, 6 ml Eisessig, 25 ml 4 N-Natriumacetatlösung und 10 ml einer 33%igen wässrigen Lösung von Oleylalkohol, der mit 30 Äquivalenten Ethylenoxid umgesetzt ist, lässt man bei ca. 10 °C die Lösungen der Diazo- und Kupplungskomponente gleichzeitig zutropfen. Nach dem Auskuppeln saugt man ab, wäscht mit Wasser salzfrei und trocknet. Dann erhitzt man das Rohpigment 15 Minuten bei 140 °C in 500 ml Dimethylformamid. Man saugt erneut ab, wäscht mit Wasser nach und trocknet. Ausbeute: 26,7 g eines rotstichig-braunen Pigmentes der Formel

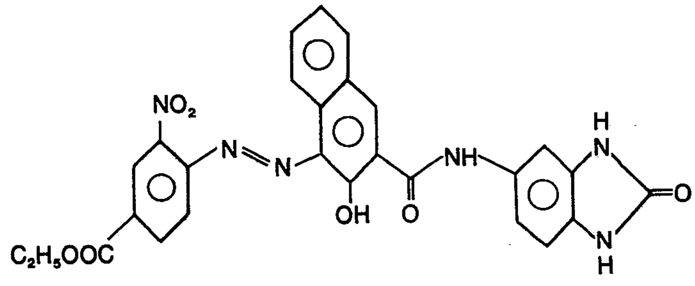

mit sehr guten Licht- und Wetterechtheiten und einwandfreier Migrationsechtheit.

Beispiel 2

9,8 g 3-Nitro-4-aminobenzoesäuremethylester werden eine Stunde lang in einer Mischung aus 160 ml Eisessig und 30 ml 31%iger Salzsäure verrührt. Man kühlt dann auf 5 bis 10 °C ab und diazotiert durch Zutropfen von 10 ml einer 5 N-Natriumnitritlösung.

18,5 g 5-(2′-Hydroxy-3′-naphthoylamino)-7-chlorbenzimidazolon-(2) werden mit 10 ml 33%iger Natronlauge in 75%igem wässrigem Ethanol gelöst. Man legt eine Mischung von 200 ml Eiswasser, 6 ml Eisessig, 25 ml 4 N-Natriumacetatlösung und 10 ml einer 10%igen wässrigen Lösung von Stearylalkohol, mit 30 Äquivalenten Ethylenoxid umgesetzt, vor. Bei 5 bis 10 °C tropfen gleichzeitig die Lösungen der vorstehend bereiteten Diazo- und Kupplungskomponente zu. Das Pigment kuppelt sofort aus. Man hält eine Stunde bei 95 °C, saugt heiss ab, wäscht salzfrei und trocknet das Rohpigment. Anschliessend wird das trockene Pigment in 600 ml Chlorbenzol suspendiert und eine Stunde auf 130 °C erhitzt. Man saugt heiss ab, wäscht mit Ethanol und Wasser nach und trocknet.

Man erhält 26,9 g eines braunstichig-roten Pigmentes der Formel

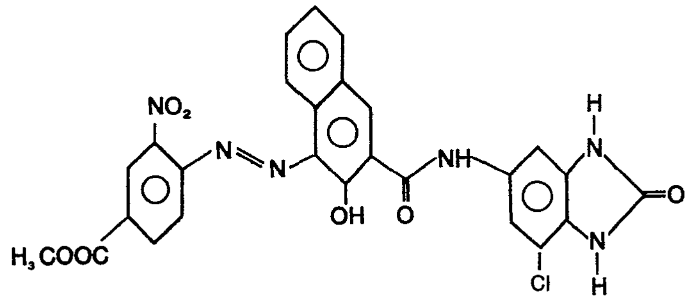

mit sehr guten Licht- und Wetterechtheiten und einwandfreier Migrationsechtheit.

In der nachstehenden Tabelle sind weitere Beispiele von Azoverbindungen beschrieben, die durch Kuppeln der diazotierten aromatischen Amine (Diazokomponente) der Formel II mit den Kupplungskomponenten der Formel III erhalten werden:

| Bsp. Nr. | Formel II R | Formel III X | Y | Z | Farbton |
|---|---|---|---|---|---|
| 3 | $CH_3$ | H | H | H | gelbst.-braun |
| 4 | $CH_3$ | 6-Cl | H | H | rotst.-braun |
| 5 | $CH_3$ | 6-Br | H | H | braun |
| 6 | $CH_3$ | 7-Br | H | H | braun |
| 7 | $CH_3$ | 6-$CH_3$ | H | H | braun |
| 8 | $CH_3$ | 7-$CH_3$ | H | H | braun |
| 9 | $CH_3$ | 4-$CH_3$ | H | H | gelbst.-braun |
| 10 | $CH_3$ | 6-$OCH_3$ | H | H | rotst.-braun |
| 11 | $CH_3$ | 7-$OCH_3$ | H | H | rotst.-braun |
| 12 | $CH_3$ | 6-$OC_2H_5$ | H | H | rotst.-braun |
| 13 | $CH_3$ | H | $CH_3$ | H | gelbst.-braun |
| 14 | $CH_3$ | H | H | Br | gelbst.-braun |
| 15 | $C_2H_5$ | 6-Cl | H | H | rotst.-braun |
| 16 | $C_2H_5$ | 7-Cl | H | H | rotst.-braun |
| 17 | $C_2H_5$ | 6-$CH_3$ | H | H | braun |
| 18 | $C_2H_5$ | 7-$CH_3$ | H | H | braun |
| 19 | $C_2H_5$ | 6-$OCH_3$ | H | H | rotst.-braun |
| 20 | $C_2H_5$ | 6-$OC_2H_5$ | H | H | rotst.-braun |
| 21 | n-$C_3H_7$ | H | H | H | gelbst.-braun |
| 22 | n-$C_3H_7$ | 7-Cl | H | H | rotst.-braun |
| 23 | n-$C_3H_7$ | 7-$CH_3$ | H | H | braun |
| 24 | iso-$C_3H_7$ | H | H | H | gelbst.-braun |
| 25 | iso-$C_3H_7$ | 7-Cl | H | H | braun |
| 26 | n-$C_4H_9$ | H | H | H | braun |
| 27 | n-$C_4H_9$ | 7-Cl | H | H | rotst.-braun |
| 28 | n-$C_4H_9$ | 7-$CH_3$ | H | H | braun |
| 29 | iso-$C_4H_9$ | H | H | H | braun |
| 30 | iso-$C_4H_9$ | 7-Cl | H | H | rotst.-braun |
| 31 | $C_2H_5-\underset{CH_3}{CH}-$ | H | H | H | braun |
| 32 | $C_2H_5$ | H | H | Br | gelbst.-braun |
| 33 | $C_2H_5$ | 7-$C_2H_5$ | H | H | gelbst.-braun |
| 34 | $C_2H_5$ | H | $C_2H_5$ | H | marron |

## Patentansprüche

1. Azoverbindungen der Formel I

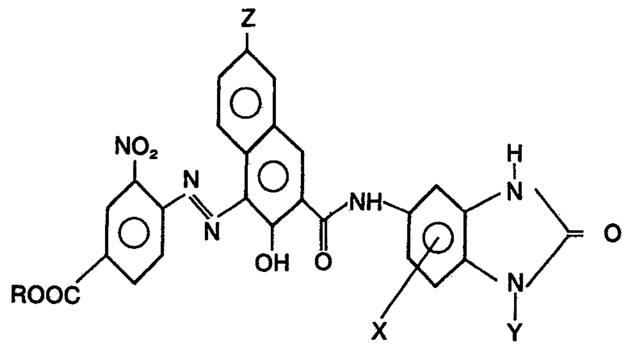

I

in der R einen Alkylrest mit 1 bis 4 C-Atomen, X ein Wasserstoff-, Chlor- oder Bromatom, eine Methyl-, Ethyl-, Methoxy- oder Ethoxygruppe, Y ein Wasserstoffatom, eine Methyl- oder Ethyl-Gruppe und Z ein Wasserstoff-, Brom- oder Chloratom bedeuten.

2. Verbindung nach Anspruch 1, in der R Ethyl und X, Y und Z Wasserstoff bedeuten.

3. Verbindung nach Anspruch 1, in der R Methyl, X Chlor in 7-Stellung und Y und Z Wasserstoff bedeuten.

4. Verbindung nach Anspruch 1, in der R und Y Ethyl und X und Z Wasserstoff bedeuten.

5. Verbindung nach Anspruch 1, in der R Methyl, X Methyl in 6-Stellung und Y und Z Wasserstoff bedeuten.

6. Verfahren zur Herstellung der Azoverbindungen nach Anspruch 1, dadurch gekennzeichnet, dass man Verbindungen der Formel II

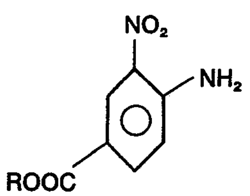

II

in der R die im Anspruch 1 genannte Bedeutung hat, diazotiert und die erhaltene Diazoniumverbindung mit einer Verbindung der Formel III

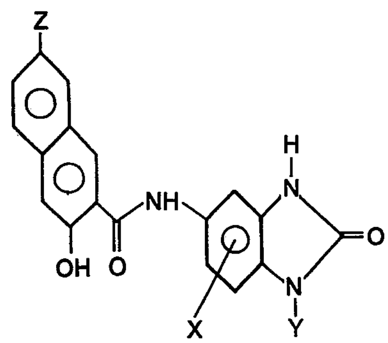

III

in der X, Y und Z die in Anspruch 1 genannten Bedeutungen aufweisen, kuppelt.

7. Verfahren nach Anspruch 6, dadurch gekennzeichnet, dass die Diazotierung bei −10 bis +30 °C und die Kupplung bei 0 bis 40 °C erfolgen.

8. Verwendung der Verbindungen gemäss Anspruch 1 als Farbmittel.

9. Verwendung der Verbindungen gemäss Anspruch 1 als Pigmente.

10. Verwendung der Verbindungen gemäss Anspruch 1 zum Färben bzw. Bedrucken von Kunststoffen, natürlichen und synthetischen Harzen, Kautschuk, Papier, Viskoseseide, Zelluloseestern bzw. -äthern, Polyolefinen, Polyurethanen, Polyacrylnitril oder Polyglykolterephthalaten sowie zur Herstellung von Druckfarben, Lackfarben oder Dispersionsanstrichfarben.

## Claims

1. Azo compounds of the formula I

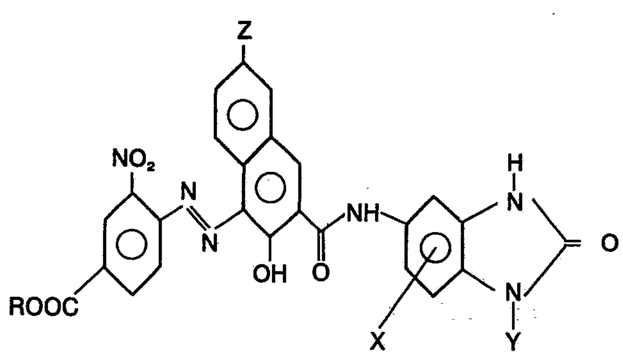

I

wherein R ist alkyl of 1 to 4 carbon atoms, X is hydrogen, chlorine, bromine, methyl, ethyl, methoxy or ethoxy, Y is hydrogen, methyl or ethyl and Z is hydrogen, chlorine or bromine.

2. Compound according to claim 1, wherein R is ethyl and X, Y and Z are hydrogen.

3. Compound according to claim 1, wherein R is methyl, X is chlorine in 7-position and Y and Z are hydrogen.

4. Compound according to claim 1, wherein R and Y are ethyl and X and Z are hydrogen.

5. Compound according to claim 1, wherein R is methyl, X is methyl in 6-position and Y and Z are hydrogen.

6. Process for the preparation of azo compounds according to claim 1, which comprises diazotizing compounds of the formula II

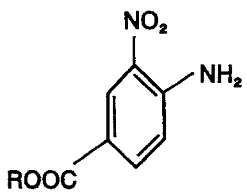

II

wherein R is defined as in claim 1, and coupling the so-obtained diazonium compound onto a compound of the formula III

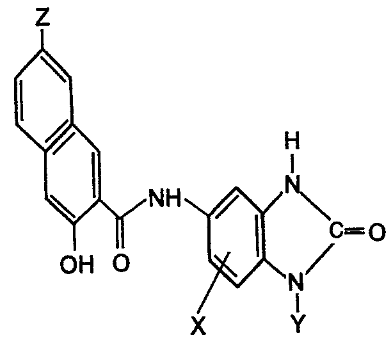

III

wherein X, Y and Z are defined as in claim 1.

7. Process according to claim 6, wherein diazotizing is carried out at −10 to +30 °C and coupling at 0 to 40 °C.

8. Use of the compounds according to claim 1 as colorants.

9. Use of the compounds according to claim 1 as pigments.

10. Use of the compounds according to claim 1 for the dyeing of or printing on plastics, natural or synthetic resins, rubber, paper, viscose rayon, cellulose esters or ethers, polyolefines, polyurethanes, polyacrylonitrile or polyglykolterephthalates as well as for preparing printing inks, paints or emulsion paints.

**Revendications**

1. Composé azoïques caractérisés en ce qu'ils répondent à la formule I:

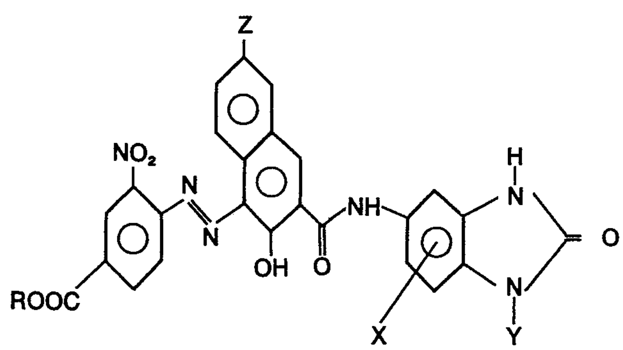

I

dans laquelle R représente un radical alkyle ayant 1 à 4 atomes de carbone, X un atome d'hydrogène, de chlore ou de brome ou un groupe méthyle, éthyle, méthoxy ou éthoxy, Y un atome d'hydrogène ou un groupe méthyle ou éthyle et Z un atome d'hydrogène, de brome ou de chlore.

2. Composé selon la revendication 1, caractérisé en ce que R représente un groupe éthyle et X, Y et Z représentent chacun un atome d'hydrogène.

3. Composé selon la revendication 1, caractérisé en ce que R représente un groupe méthyle, X un atome de chlore en position 7 et Y et Z un atome d'hydrogène.

4. Composé selon la revendication 1, caractérisé en ce que R et Y représentent chacun un groupe éthyle et X et Z chacun un atome d'hydrogène.

5. Composé selon la revendication 1, caractérisé en ce que R représente un groupe méthyle, X un groupe méthyle en position 6 et Y et Z chacun un atome d'hydrogène.

6. Procédé pour préparer les composés azoïques selon la revendication 1, caractérisé en ce qu'on diazote des composés de formule II:

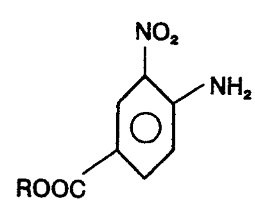

II

(dans laquelle R a le sens cité à la revendication 1) et l'on copule le composé de diazonium obtenu avec un composé de formule III:

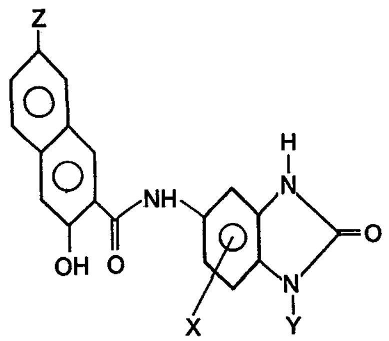

III

(dans laquelle X, Y et Z ont le sens indiqué à la revendication 1).

7. Procédé selon la revendication 6, caractérisé en ce qu'on effectue la diazotation entre −10 et +30 °C et la copulation entre 0 et 40 °C.

8. Application des composés selon la revendication 1 comme colorants.

9. Application des composés selon la revendication 1 comme pigments.

10. Application des composés selon la revendication 1 pour colorer, teindre ou imprimer des matières plastiques, des résines naturelles et synthétiques, du caoutchouc, du papier, de la soie de viscose, des esters ou éthers de la cellulose, des polyoléfines, des polyuréthanes, du polyacrylonitrile ou des poly(téréphtalates de glycol) ainsi que pour préparer des encres d'imprimerie, des peintures laquées ou des peintures émulsionnées.